# EUROPEAN PATENT APPLICATION

(11) **EP 1 970 118 A1**
(43) Date of publication of application: **17.09.2008**
(21) Application number: 07104147.9
(22) Date of filing: 14.03.2007
(51) Int. Cl.: B01J 23/63, B01D 53/94, F01N 3/08

(54) **Oxidation catalyst, method of making such catalyst and IC engine using such catalyst**

(71) Applicant: Ford Global Technologies, LLC, Dearborn, MI 48126 (US)
(72) Inventor: Chigapov, Albert, 52072, Aachen (DE); Carberry, Brendan, 52074, Aachen (DE)
(74) Representative: Drömer, Hans-Carsten

(57) **Abstract**

The present invention relates to an oxidation comprising a substrate and a coating covering said substrate, wherein said coating comprises platinum (Pt), palladium (Pd), cobalt (Co), iron (Fe) and cerium (Ce). Furthermore the invention relates to a method for producing such an oxidation catalyst and an internal combustion engine using such an oxidation catalyst. The catalyst is designed for low-temperature CO and hydrocarbons oxidation activity whilst having low NO₂ emissions.

## Description

The present invention relates to an oxidation comprising a substrate and a coating covering said substrate, wherein said coating comprises platinum (Pt), palladium (Pd), cobalt (Co), iron (Fe) and cerium (Ce). Furthermore the invention relates to a method for producing such an oxidation catalyst and an internal combustion engine using such an oxidation catalyst.

For automotive applications an oxidation catalyst (OC) is arranged normally within the exhaust gas system for oxidizing unburned hydrocarbons (HC) and carbon monoxide (CO) present in the exhaust gas. A conventional oxidation catalyst comprises a substrate containing aluminum oxide (AL₂O₃) e.g. an alumina washcoated cordierite substrate and a coating which comprises platinum (Pt). Such an oxidation catalyst can be called a Pt/alumina-catalyst or Pt catalyst.

If a particulate filter is already disposed in the exhaust pipe the oxidation catalyst is normally placed upstream of said filter and used to increase the exhaust gas temperature for the purpose of filter regeneration.

Because a conventional Pt/alumina-catalyst is not very active at temperatures below 100 °C, catalysts were developed with an improved conversion rate at temperatures below 100 °C representing temperatures at cold-start conditions of an internal combustion engine.

To improve the conversion rates below temperatures of 100 °C Platinum-Palladium coating on aluminum substrate were introduced. Such an oxidation catalyst can be named a Pt-Pd/alumina-catalyst or Pt-Pd catalyst.

A mixed Pt-Pd/alumina-catalyst for CO oxidation under cold-start conditions is described in the WO 96/39576. The disclosed catalyst is able to oxidize CO at near room temperature, but only if using zeolite as water trap and hydrocarbon trap to avoid catalyst poisoning by water and hydrocarbons. This catalyst is also vulnerable to sulfur compounds due to the palladium addition and is designed basically for gasoline vehicles having low sulfur level.

Similar Pt-Pd catalysts are also described in the US 5128306 and JP 2005248787.

Another advantage of such a bimetallic Pt-Pd/alumina-catalyst in comparison to conventional monometallic Pt/alumina catalyst is its higher thermal stability which is important taking into account that the catalyst temperature can reach 650°C during filter regeneration of a particulate filter.

Furthermore said bimetallic Pt-Pd/alumina catalyst is also less expensive due to lower, more than four times lower costs of Palladium compared to Platinum. But the most important advantage of such bimetallic catalyst is its tolerance to poisoning by CO adsorption in contrast to monometallic Pt standard catalyst and accordingly higher activity in CO oxidation at low temperatures and especially at high CO concentrations, as mentioned above.

The properties and advantages of such mixed Pt-Pd oxidation catalysts were e. g. published in "Bimetallic Pt/Pd diesel oxidation catalysts" (Morlang, A.; Neuhausen, U.; Klementiev, K. V.; Schuetze, F.-W.; Miehe, G.; Fuess, H.; Lox, E. S.; Institute for Materials Science, Darmstadt University of Technology, Petersenstr. 23, Darmstadt, Germany. Applied Catalysis, B: Environmental (2005), 60(3-4), 191-199. Publisher: Elsevier B.V)

One disadvantage of such oxidation catalysts is that typically the amount of NO₂ is significantly higher after the exhaust gases have passed such a catalyst because of that oxidation catalyst is able to oxidize the present NO with in the exhaust gases to NO₂.

This effect is much more obvious on Diesel engines than on gasoline engines because of the lean engine operation mode of Diesel engines, i.e., the excess of oxygen. Unfortunately, Pt-Pd catalysts are also increasing NO₂ emissions similar to Pt catalysts.

Increased NO₂ emissions are one of the major issues caused by the introduction of oxidation catalyst. Specific NO₂ emissions are not yet subject of the current direct emission legislation, but are taken into account in legislated NOₓ levels which covers all the emitted nitrogen oxides, in particular NO and NO₂.

Nitrogen dioxide (NO₂) is responsible for the major contribution to the smell of diesel exhaust gas and especially harmful for lungs. Effects of NO₂ emissions are also acid rain deposition, drinking water deposition, and effect on vegetation. NO₂ together with soot particulates (PM) are the main issues for further development of Diesel engines.

Hence, special measures have to be taken to suppress NO₂ emissions from oxidation catalysts. Normally such NO₂ suppression is active and requires reductant e.g. fuel/hydrocarbons or urea and sophisticated active means for such suppression and in general an additional aftertreatment device is needed for reducing nitrogen dioxide present in the exhaust gas.

Current technologies such as SCR (Selective Catalytic Reduction) using ammonia or urea) and LNT (Lean NOₓ Trap) are designed for reduction of both NO and NO₂ and not specially for NO₂ reduction and are currently far from to being ready for installation with Diesel combustion engines, whilst the problem of NO₂ emissions is growing every year due to installation of oxidation catalysts on Diesel fueled cars as those oxidation catalysts are forming a certain amount of NO₂ emissions. Those NO₂ emissions are causing the typical specific smell of Diesel fueled cars.

For example JP 2005023921 discloses an exhaust emission control device to reduce NO₂ having an oxidation catalyst arranged at the front stage of a selective reduction catalyst, a bypass flow path is provided via which exhaust gas is guided to the selective reduction catalyst while bypassing the oxidation catalyst. In an operated condition where NO₂ is excessively produced by the oxidation catalyst, part of the exhaust gas is guided via the bypass flow path to the selective reduction catalyst while bypassing the oxidation catalyst, which properly restricts the amount of the NO₂ to be produced by the oxidation catalyst. JP 2005002968 shows a similar design.

JP 2005009407 shows a different approach. In a path of an engine exhaust gas, a fuel-supply valve, a catalyst, and a particulate filter are provided in this order along a flow of the exhaust gas. Platinum having a high oxidation activity is carried on an upstream end of the catalyst. Palladium is carried on a downstream end of the catalyst in order to reductively eliminate NO₂ formed by the platinum.

JP 2004353619 discloses a method to reduce NOₓ to N₂. The system is equipped with a discharge device installed in an exhaust pipe in which exhaust gas is discharged and making ozone (O₃) obtained by plasma discharge in oxygen (O₂) and nitrogen monoxide (NO) contained in exhaust gas react to generate nitrogen dioxide (NO₂). A nitrogen dioxide (NO₂) reduction catalyst is installed in a later part of the discharge device in the exhaust pipe and is reducing nitrogen dioxide (NO₂) to nitrogen (N₂).

The disadvantage of all those cited prior art of NO₂ suppression is that all of those methods require reductant, active strategy and/or additional devices.

It is therefore an object of the present invention to create an oxidation catalyst with low NO₂ emissions regarding conventional Pt or Pt-Pd/alumina catalyst without using expensive additional NO₂ suppression systems, whilst keeping the same or showing even higher activity in CO oxidation and HC oxidation and furthermore with the same or higher thermal stability.

Another object of the present invention is to provide a method for producing such an oxidation catalyst.

Another additional object of the present invention is the use of such an oxidation catalyst for purifying the exhaust gas emissions of an internal combustion engine.

According to the present invention and with respect to the first object an oxidation catalyst is disclosed comprising a substrate and a coating covering said substrate, wherein said coating comprises platinum (Pt) and palladium (Pd) and additionally said coating comprises active oxide components of cobalt (Co), iron (Fe) and cerium (Ce).

The addition of those three oxides increased significantly the activity of a conventional Pt-Pd /alumina catalyst in CO and HC oxidation even under lean engine operating conditions, i.e. in excess of oxygen. The resulting catalyst Pt-Pd-Co-Fe-Ce/alumina is highly active in CO oxidation at near room temperature and high space velocities. Hydrocarbons oxidation activity is also better. The inventive catalyst is more thermally stable than conventional Pt-Pd/alumina catalysts after aging at 650°C in reaction mixture. The addition of cobalt oxide, iron oxide and cerium oxide together also strongly suppressed NO₂ formation properties and accordingly lead to low NO₂ emissions from the inventive oxidation catalyst.

A preferred embodiment of the inventive catalyst is that said coating's total content of said precious metals Pt and Pd is lower than 10 wt%, preferably lower 5 wt% relating to the total coating weight and preferably the Pt/Pd molar ratio is 1:1.

A preferred embodiment of the inventive catalyst is that said coating's total content of said active oxide component of cobalt (Co) ranges between 1 wt% and 3 wt% relating to the total coating weight, preferably between 1.5 wt% and 2.5 wt% relating to the total coating weight.

A preferred embodiment of the inventive catalyst is that said coating's total content of said active oxide component of iron (Fe) ranges between 1 wt% and 12 wt% relating to the total coating weight, preferably between 4 wt% and 9wt% relating to the total coating weight.

A preferred embodiment of the inventive catalyst is that said coating's total content of said active oxide component of cerium (Ce) ranges between 2 wt% and 6.5 wt% relating to the total coating weight, preferably between 3.5 wt% and 5 wt% relating to the total coating weight.

Furthermore a method is provided for producing an oxidation catalyst according to any of the above described embodiments, which comprises the covering of the selected substrate, typically cordierite which was washcoated preliminary with alumina, with a catalytic coating containing platinum (Pt), palladium (Pd) and active oxide components of cobalt (Co), iron (Fe) and cerium (Ce).

The inventive method of producing an oxidation catalyst comprises following steps:
- prepare a solution containing
   i. platinum (Pt) tetra ammine salts,
   ii. palladium (Pd) tetra ammine nitrate,
   iii. nitrates of iron (Fe), cerium (Ce) and cobalt (Co),
   iv. tartaric acid
- impregnation of a support structure with this solution
- slow drying
- calcination.

Platinum (Pt) tetra ammine salts will act as platinum precursors whereby those salts are preferably nitrates or hydroxide compounds. Palladium (Pd) tetra ammine nitrate will act as a precursor for palladium.

The used support structure could be e.g. an alumina support with high surface area, e. g. 212 m²/g or an alumina washcoated cordierite substrate.

Nevertheless other support oxides could be used instead of an alumina support as well. For example, zirconium or Cerium-zirconium e.g. with a molar ratio of 3 to 1 could be used.

The inventive method of preparing said catalyst coating by using tartaric acid as a complexing agent results in obtaining high activity in oxidation of carbon monoxide and hydrocarbons and improves the activity of Pt and Pt-Pd/catalysts on alumina in comparison with standard commercial catalyst.

Said tartaric acid is preferably added in excess necessary relative to metallic and metallic oxide precursor components. Preferably a factor of 1.2 to 20 of the necessary amount of tartaric acid is used. In addition tartaric acid will act as a complexing agent and soft reductant of precious metal precursors. The use of citric acid instead of tartaric acid leads to similar, but lower results, while an activity of catalysts prepared without hydroxy-carboxylic acids is significantly lower. The use of platinum tetra ammine hydroxide and tartaric acid together requires first very slow, drop wise addition of the hydroxide to the solution of tartaric acid under low temperature conditions to avoid violent reaction between both components with formation of platinum-containing deposit. There is no such problem with tetra ammine platinum nitrate.

The inventive catalyst is in particular suitable for reducing unburned hydrocarbons (HC) and carbon monoxide (CO) emissions of an internal combustion engine.

The inventive catalyst could be used as an automotive aftertreatment device for reducing exhaust gas emissions, especially for carbon dioxide (CO), hydrocarbons (HC) and is designed for high activity in CO and HC reduction and nitrogen dioxide (NO₂) emission's reduction from diesel engines. The inventive catalyst could also be applied to stationary diesel engines in industry and gasoline-fueled engines and low-temperature CO elimination for different processes, for example respiratory protection systems, closed parking areas and garage areas.

In the following figures will illustrate the advantages of the invention mainly by displaying conversion rates for typical test conditions:
- Figure 1: shows a diagram representing the effect of the addition of Pd, Co, Fe and Ce on activity of Pt/alumina catalysts in CO oxidation, (Prior art)
- Figure 2: shows the activity of different catalysts in CO oxidation using fresh catalysts
- Figure 3: shows the activity of the inventive catalysts (C4) in CO oxidation in comparison to the reference catalysts (C2)
- Figure 4: is illustrating the activity in CO oxidation of the inventive catalyst (C4) in comparison to the reference catalyst (C2) and the standard Pt catalyst (C1) in CO oxidation after thermal aging
- Figure 5: contains an example for the conversion of unburned HCs by presenting the propane oxidation activity for different types of catalysts
- Figure 6: shows the NO conversion to NO₂ on the inventive catalyst (C4) in comparison to the standard catalyst (C1), the reference catalyst (C2) and comparative catalysts (C3) using fresh catalysts
- Figure 7: shows the NO conversion to NO₂ on the inventive catalyst (C4) in comparison to the standard catalyst (C1), the reference catalyst (C2) and comparative catalysts (C3) after aging
- Figure 8: shows the NO oxidation capability of the inventive catalyst (C4) compared to the reference catalyst (C2)
- Figure 9: is representing the catalytic activity in CO oxidation of the inventive catalyst (C4) supported on different oxides
- Figure 10: shows the catalytic activity in CO oxidation of the inventive catalyst (C4) supported on pure alumina and alumina-coated cordierite

For the investigations described below an alumina-washcoated cordierite having 400 cpsi and an alumina loading of 38 weights% was used as a support.

All catalysts were tested in a laboratory-scale packed-bed flow reactor made from a 1 cm ID x 5 cm L quartz tube. An electric furnace was used for heating the reactor. The temperature was monitored by a thermocouple placed in the center of the catalyst bed. A powdered catalyst sample with catalyst loading of 10-200 mg depending on catalyst density was diluted with 1cm³ of quartz sand, then inserted into the reactor and exposed to the feed gas mixtures.

The reaction mixture of 10 vol% O₂, 0.13 vol% CO, 250 ppm C₃H₆, 50 ppm C₃H₈, 5.2 vol% H₂O, 4.9 vol% CO₂, 210 ppm NO with N₂ as a balance was used to simulate typical diesel exhaust gas composition. A conventional flow setup was used for gas mixture preparation. All gases were of ultra high purity. A humidifier was installed to provide precise water concentration in the gas line. The flow rates were controlled using mass flow controllers (MKS, Munich, Germany). To prevent water condensation, all connection lines were installed in a thermal box maintaining constant temperature of 85°C. Reactor effluents were analyzed with a HP 6890A gas chromatograph, using Porapak Q and NaX capillary columns. Chemiluminescence NO/NOₓ analyzer (Eco-physics company) CLD-700 EI ht was used for continuous NO and NO₂ measurement.

Before testing, all fresh catalysts were reduced in the hydrogen flow at 160°C for 20 minutes with following cooling. Aging was carried out in reaction mixture at 550°C for three hours and 650°C for one hour. BET surface areas were measured by N₂ adsorption at 77K using Micromeritics 2010 ASAP instrument. XRD study was carried out using DRON 4 diffract meter with Cu Kα radiation.

Following types of catalysts were used for testing using different types of preparation and different precious metal loadings:
Type C1.1 is a conventional Pt/alumina-catalyst with 140 grams of Pt per cubic foot (140 g/ft³, called standard A).
   C1.2 is a conventional Pt/alumina-catalyst (90 g/ft³, called standard B).
   C1.3 is a Pt-Pd catalyst (120 g/ft³ Pt and 120 g/ft³Pd). Those three types of catalysts can be applied for Diesel aftertreatment and are available as a standard commercial catalyst. The calcination temperature in preparing those samples was the same temperature as for the inventive samples (see below).
Catalysts C2.1 and C2.2 were used as reference samples. C2.1 is a Pt/alumina and C2.2 a Pt-Pd/alumina catalyst. The difference to C1.1 to C1.3 is that they were prepared with tartaric acid.

Catalyst C2.1 was prepared using 1.5g of tetra ammine platinum (II) nitrate (Pt 49.9 wt%) and 6.0g of L-(+)-tartaric acid dissolved in 10g of distilled water. Afterwards 7.5 g of finely grinded alumina were impregnated with thus prepared hot solution (80°C) under stirring and dried at 77°C for sixteen hours. The dried catalyst precursor was finally calcined at 500°C for one hour. Pt loading was 9 wt%.

Catalyst C2.2 was prepared by using 1.2 g of tetra ammine platinum (II) nitrate (Pt 49.9 wt%), 0.855g of tetra amine palladium (II) nitrate (Pd 35.1 wt%) and 6.0 g of L-(+)-tartaric acid dissolved in 10g of distilled water. Afterwards 7.5 g of finely grinded alumina were impregnated with thus prepared hot solution (80°C) under stirring and dried at 77°C for sixteen hours. The dried catalyst precursor was finally calcined at 500°C for two hours. Total Pt + Pd loading was 9wt%.

An alumina washcoated cordierite monolith was also used as a substrate (core sample 1" x1.5") and impregnated with solution containing catalytic precursors as described above, but Pt loading was selected as 90g/ft³.

The catalysts of type C3 are comparative samples, which were prepared using the same conditions and chemicals as described for catalyst of type C1 and C2, but with addition of iron nitrate C3.1.1 (Pt-Fe/Al₂O₃), C3.2.1 (Pt-Pd-Fe/Al₂O₃), cobalt nitrate C3.1.2 (Pt-Co/Al₂O₃), C3.2.2 (Pt-Pd-Co/Al₂O₃) or cerium (III) nitrate C3.1.3 (Pt-Ce/Al₂O₃), C3.2.3 (Pt-Pd-Ce/Al₂O₃) or containing together Fe-Co (C3.1.10 or C3.2.10); Fe-Ce (C3.1.11 or C3.2.11) or Co-Ce (C3.1.12 or C3.2.12) nitrates. The amount of base metal oxides varied between 0.5g and 6.5 g.

Type 4 catalysts (C4) are representing the inventive Pt-Pd-Fe-Co-Ce/oxides catalyst and they were prepared conducting the following steps:
Firstly 1.2 g of tetra ammine platinum (II) nitrate, 0.855g of tetra amine palladium (II) nitrate and 6.0 g of L-(+)-tartaric acid were dissolved in 10g of distilled water. The determined amount of iron (II) nitrate (from 0.4g to 6.4g, preferably 1.2-4.0g), cobalt (II) nitrate (from 0.5g to 1.1g, preferably 0.5-0.87g) and cerium (III) nitrate (from 0.55 to 1.5g, preferably 0.8- 1.0g) were added under stirring with the following heating to 80°C on stirrer.

Subsequently 7.5 g of finely grinded alumina were impregnated with thus prepared hot solution (80°C) under stirring and dried at 77°C for sixteen hours.

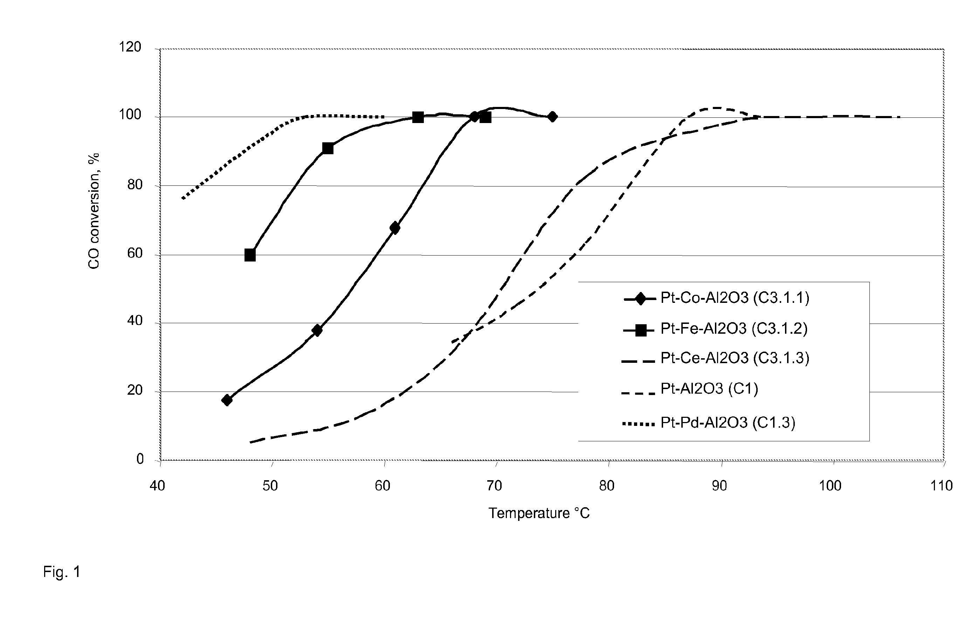

Figure 1 shows the catalytic activity in CO oxidation using fresh catalyst samples. The reaction mixture included 10% O₂, 0.13 vol% CO, 250 ppm C₃H₆, 50 ppm C₃H₈, 5.2 vol.-%H₂O, 4.9 vol.-%CO₂, 210ppm NO with N₂ as a balance and a space velocity of 100 000 h-1.

As it can be seen three oxides among tested basic oxides, namely iron (Fe), cobalt (Co) and ceria (Ce) are improving the activity of standard Pt-Al₂O₃ catalysts in CO oxidation, while NO₂ emissions are lower.

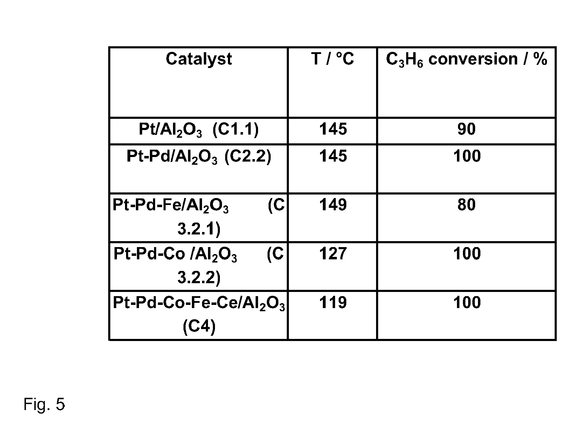

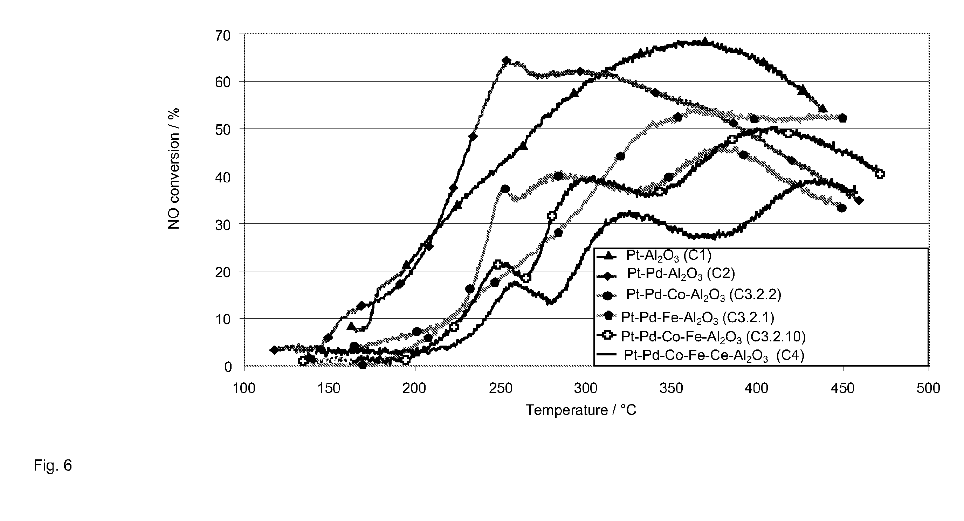

However, the addition of palladium to Pt-Pd-Al₂O₃ catalyst (reference) has shown really outstanding performance and higher activity in CO oxidation far exceeding the activity of standard Pt catalyst and it was more active than Pt with an addition of oxides of Fe, Co or Ce. However, NO₂ emissions from this reference catalyst were even higher than for standard Pt only catalyst as can be seen in Figures 5 and 6.

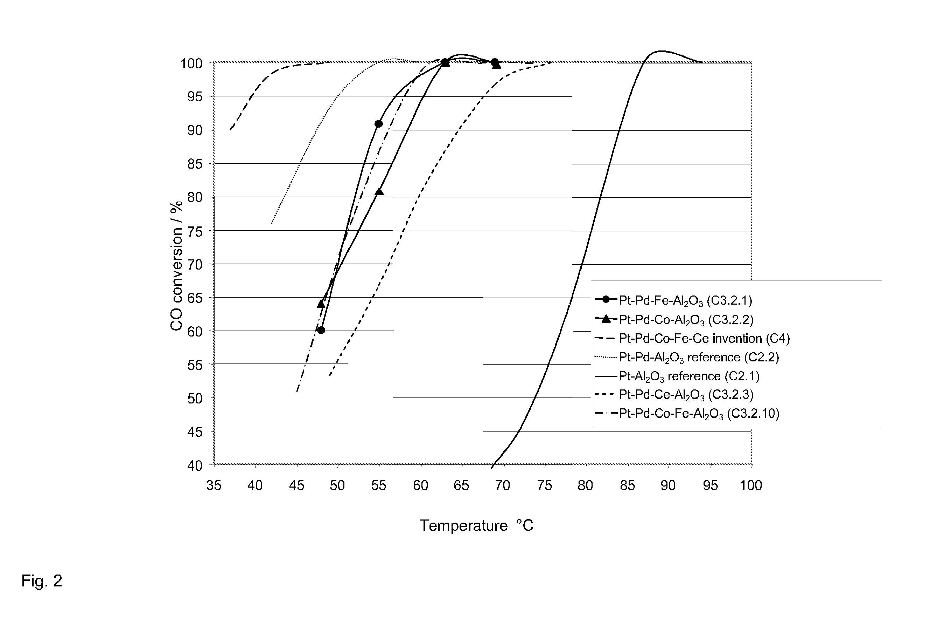

Figure 2 shows the activity in CO oxidation of the inventive and comparative catalysts. The reaction mixture is the same as for figure 1. The use of ternary Co-Fe-Ce addition to reference Pt-Pd catalyst (C4) leads to significantly higher activity than for any single oxide or binary oxide combination. Moreover, the activity in CO oxidation is higher than for reference Pt-Pd/Al2O3-catalyst. The C4 type catalyst is already quite active at near room temperature. Therefore this type of catalyst looks appropriate to be used for CO elimination in automotive area to solve the "cold-start problems".

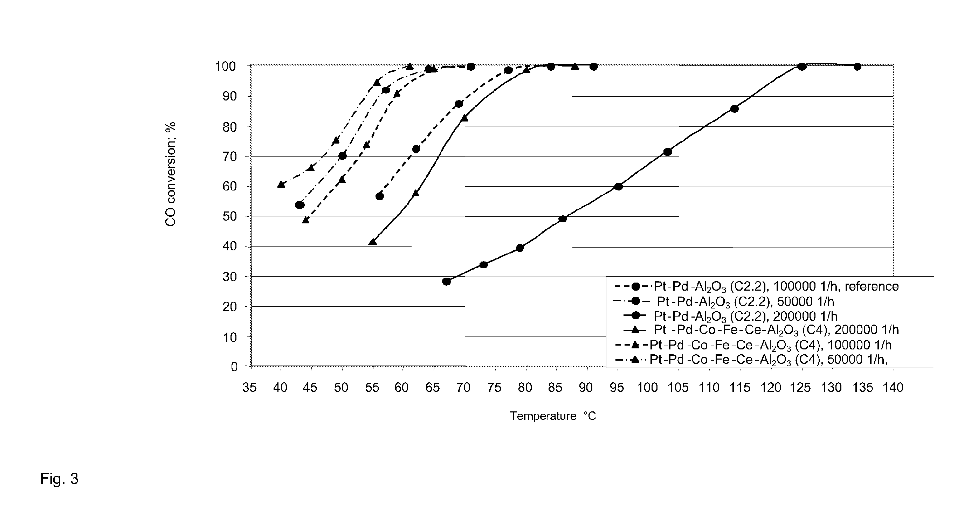

Figure 3 shows the activity of the inventive catalysts (C4) in comparison to the reference catalysts Pt-Pd/alumina (C2) in CO oxidation after thermal aging at 550°C for three hours and using the above defined reaction mixture. Space velocity (SV) was varied between 50 000 h⁻¹ and 200 000 h⁻¹. The reaction mixture was the same as before.

The activity of the inventive Pt-Pd-Co-Fe-Ce/alumina-catalyst (C4) and reference Pt-Pd/alumina catalyst (C2) in CO oxidation only slightly decreased after such aging. The inventive catalyst was more active at space velocities range from 50 000 up to 200 000h⁻¹, with the differences in activity becoming bigger at higher SV numbers. As an example, the complete CO oxidation is reached at close to 80°C on Pt-Pd-Co-Fe-Ce/Al₂O₃-catalyst (C4) of present invention and only at about 125° C on reference Pt-Pd/Al₂O₃-catalyst (C1.3) at a SV=200 000 h⁻¹. Both inventive and reference catalysts were more active than standard commercial Pt-Pd/alumina catalyst (C1), even if the C1 catalyst were having higher noble metal loadings.

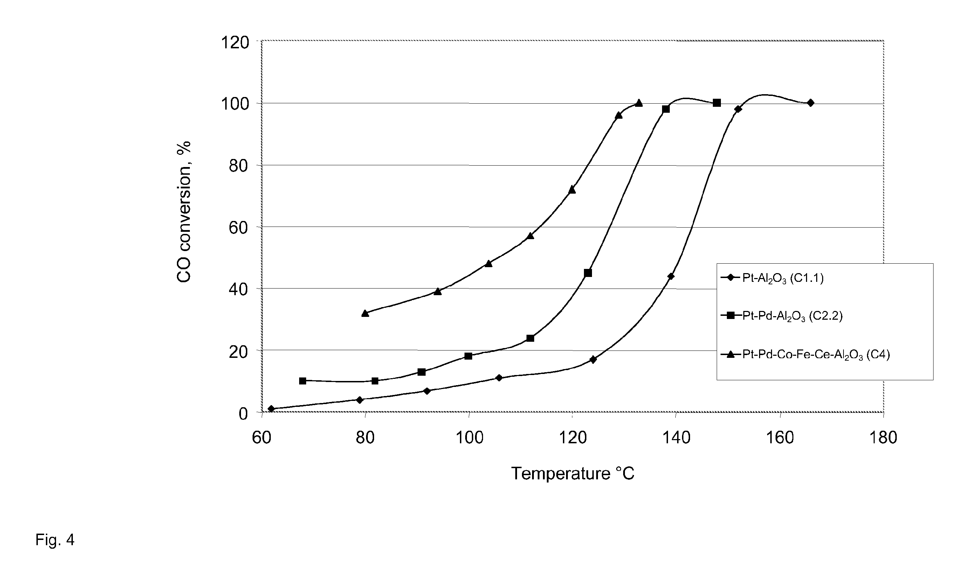

Figure 4 shows the activity of the inventive catalyst (C4) in comparison to the reference catalyst (C2.1) and the standard Pt/alumina catalyst (C1.1) in CO oxidation after more severe thermal aging at 650°C for one hour. Space velocity (SV) was 200 000 h⁻¹ and the reaction mixture as mentioned before.

As an example for the conversion of unburned HC Figure 5 shows the propane (C₃H₆) oxidation activity of different catalysts after aging those catalysts at 550°C for three hours in the above mentioned reaction mixture using a SV=200 000 h⁻¹.

As one can see in Figure 5 the addition of cobalt oxide to Pt-Pd/alumina catalyst increased the activity in propane oxidation, but iron oxide had the opposite effect. The inventive catalyst shows the best activity, i.e., results. The activity is significantly higher than for standard and reference catalysts in propane oxidation.

Figure 6 shows the NO conversion to NO₂ of the inventive catalysts (C4) in comparison to the standard catalyst (C1), the reference catalyst (C2) and comparative catalysts (C3) using the above defined reaction mixture and fresh catalysts. Space velocity (SV) was 200 000 h⁻¹. After exposing the samples to the reaction mixture for one hour, the temperature was increased with temperature ramp of 5°C per minute.

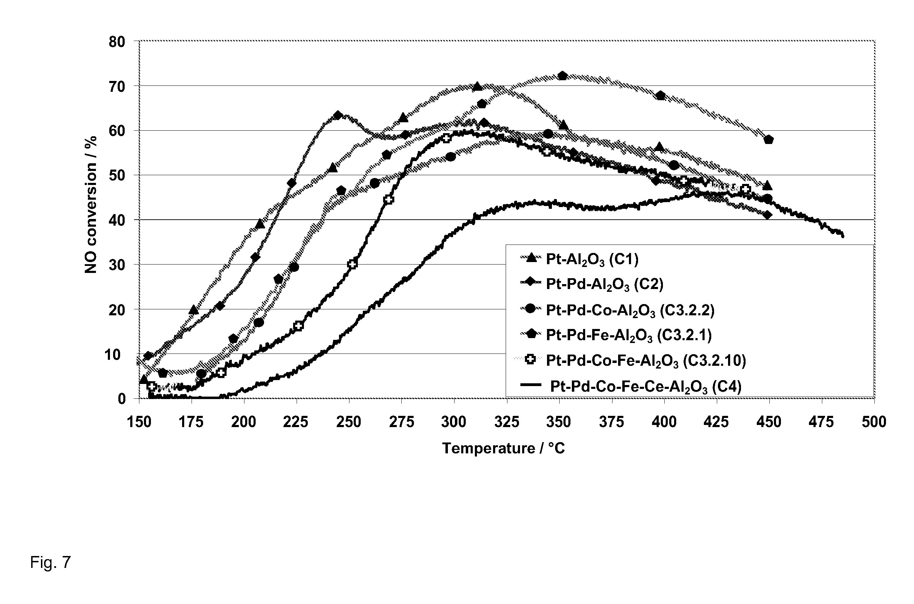

Figure 7 shows the NO conversion to NO₂ of said tested catalysts after aging the catalysts at 650°C for one hour. Boundary conditions are the same as described for Figure 6.

As can be seen, the reference Pt-Pd/alumina-catalyst (C2) had not only comparable, but even high NO₂ concentrations regarding standard Pt/alumina-catalysts (C1). Noticeable NO₂ emissions are found at and above 150°C due to the beginning of NO oxidation to NO₂.

Addition of Fe or Co or Fe-Co together (C3) decreased NO₂ formation, but for the inventive Pt-Pd-Co-Fe-Ce/alumina-catalyst (C4) NO₂ emissions are the lowest for all temperature range. There were no NO₂ emissions at all up to 225°C, while standard and reference catalysts already had reached 30-50% conversion of NO to NO₂. Maximal conversion of NO to NO₂ did not exceed 40% whereas it was high up to 60-70 % for standard and reference catalysts. Generally, NO oxidation to NO₂ is strongly suppressed by the inventive catalyst up to 300°C.

NO₂ formed at 300-400 °C can be used for soot oxidation and will be converted back to NO, while NO₂ formed at lower temperatures is useless and will be emitted to the environment. So the inventive catalyst (C4) can produce enough although lower NO₂ levels for soot oxidation, taking into account an installation of particulate filter downstream of oxidation catalyst coated with suggested formulation.

At the same time the NO₂ formation at low temperatures, which is environmentally harmful is suppressed. It is important to note that the standard and reference catalysts increased their activity in NO₂ formation after aging at 650°C in reaction mixture, as can be seen in Figure 7, but for the inventive catalyst its activity in NO₂ formation increased very slightly.

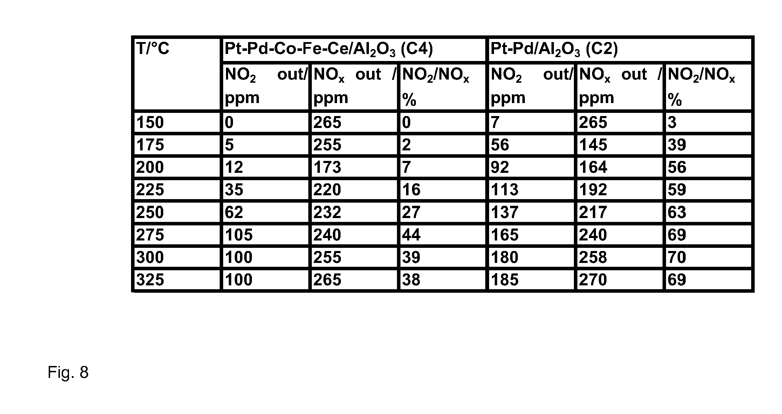

The inventive catalyst (C4) and the reference catalyst (C2) were also additionally tested under different conditions using practically the same reaction mixture. Namely, NO oxidation activity at different temperatures was tested, waiting at every temperature until the stationary concentrations of component are reached. This allows to avoid adsorption-desorption problems and to measure also passive deNOx activity (NOx reduction under action of reductants (CO and HC) from reaction mixture, reaction mixture composition as before). The results are presented in Figure 8.

The data presented in Figure 8 confirm that the inventive catalyst is much less active in NO oxidation and the data are similar to those shown in Figure 6 and Figure 7. The inventive catalyst (C4) is also less active than the reference catalyst in the deNOx process with CO and HC as a reductant in reaction mixture as expected, because deNOx (SCR- selective catalytic reduction) typically occurs via intermediate NO₂ formation, which is suppressed on the inventive catalyst.

From these data one can also conclude that low NO₂ emissions from the inventive Catalyst (C4) are basically due to low NO oxidation activity but not due to deNOx (SCR) process.

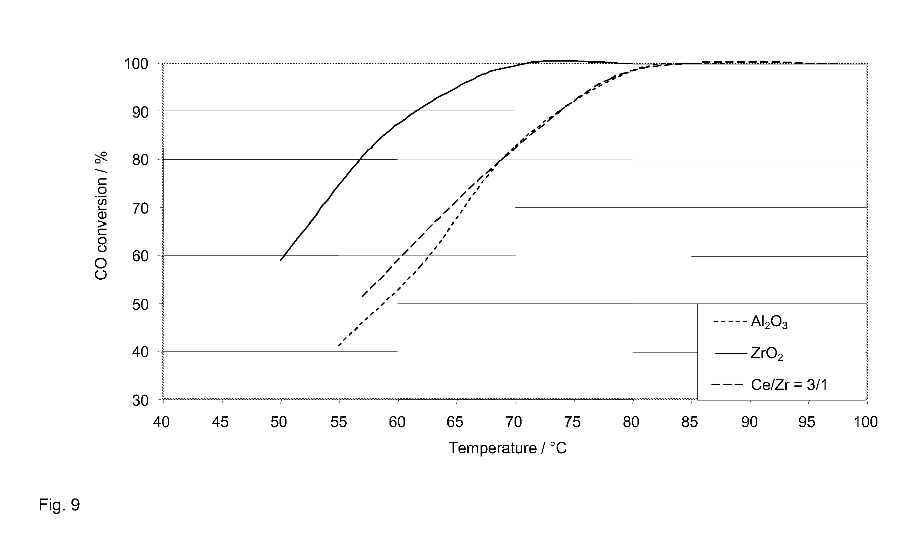

Figure 9 represents the catalytic activity in CO oxidation of the inventive catalyst C4 supported on different substrates after aging at 550°C for three hours in the above defined reaction mixture. Space velocity (SV) was 200 000 h⁻¹.

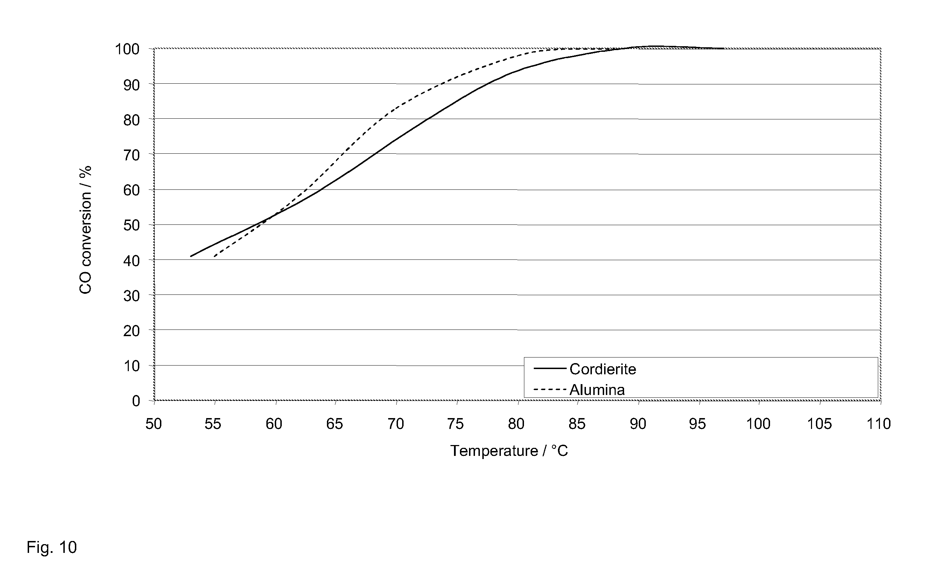

Figure 10 shows the catalytic activity in CO oxidation of the inventive catalyst (C4) supported on pure alumina and alumina-coated cordierite. Space velocity (SV) was 200 000 h⁻¹ using the reaction mixture as before.

In general aluminum oxide (alumina) is being used as a support, taking into account its practical value, because nearly all commercial washcoats for Diesel oxidation catalyst (DOC) are based on alumina.

However, the inventive catalyst can also be successfully employed on other supports. As shown in Figure 9, the activity using zirconium is even higher and is practically the same on mixed cerium-zirconium oxide, typical oxygen storage material for three-way catalyst.

Without problems the inventive Pt-Pd-Co-Fe-Ce/catalyst can be reproduced on alumina- washcoated cordierite, typical oxidation catalyst's substrate. As can be seen in Figure 10 the catalyst shows very close, just slightly lower activity for the same alumina loading for pure alumina and alumina-coated cordierite. This lower activity is probably due to the lower surface area of alumina in washcoat for cordierite.

## Claims

1. An oxidation catalyst comprising a substrate and a coating covering said substrate, wherein said coating comprises platinum (Pt) and palladium (Pd)
**characterized in that**
said coating comprises additionally active oxide components of cobalt (Co), iron (Fe) and cerium (Ce).

2. An oxidation catalyst according to claim 1,
**characterized in that**
said coating's total content of said precious metals Pt and Pd is lower than 10wt% relating to the total coating weight.

3. An oxidation catalyst according to claim 2,
**characterized in that**
said coating's total content of said precious metals Pt and Pd is lower than 5 wt% relating to the total coating weight.

4. An oxidation catalyst according to claim 2 or 3,
**characterized in that**
the molar ratio of the coating's precious metals Pt and Pd is 1:1.

5. An oxidation catalyst according to claim 1 to 4,
**characterized in that**
said coating's total content of said active oxide component of cobalt (Co) ranges between 1 wt% and 3 wt% relating to the total coating weight.

6. An oxidation catalyst according to claim 5,
**characterized in that**
said coating's total content of said active oxide component of cobalt (Co) ranges between 1.5 and 2.5 wt% relating to the total coating weight.

7. An oxidation catalyst according to claim 1 to 6,
**characterized in that**
said coating's total content of said active oxide component of iron (Fe) ranges between 1 wt% and 12 wt% relating to the total coating weight.

8. An oxidation catalyst according to claim 7,
**characterized in that**
said coating's total content of said active oxide component of iron (Fe) ranges between 4 wt% and 9 wt% relating to the total coating weight.

9. An oxidation catalyst according to claim 1 to 8,
**characterized in that**
said coating's total content of said active oxide component of cerium (Ce) ranges between 2 wt% and 6.5 wt% relating to the total coating weight.

10. An oxidation catalyst according to claim 9,
**characterized in that**
said coating's total content of said active oxide component of cerium (Ce) ranges 3.5 wt% and 5 wt% relating to the total coating weight.

11. A method of producing an oxidation catalyst comprising following steps
- prepare a solution containing
i. platinum (Pt) tetra ammine salts,
ii. palladium (Pd) tetra ammine nitrate,
iii. nitrates of iron (Fe), cerium (Ce) and cobalt (Co),
iv. tartaric acid
- impregnation of a support structure with this solution
- slow drying
- calcination

12. A method of producing an oxidation catalyst according to claim 11
**characterized in that**
said tartaric acid is added in excess with a factor of 1.2 to 20 to the above mentioned components.

13. Exhaust gas aftertreatment device, preferably for internal combustion engines,
**characterized in that**
said aftertreatment device contains an oxidation catalyst according to at least one of the claims 1 to 10 and/or an oxidation catalyst produced according to claim 11 or 12.
